Europäisches Patentamt

European Patent Office

Office européen des brevets

(19)

(11) EP 0 765 542 B1

(12) **EUROPÄISCHE PATENTSCHRIFT**

(45) Veröffentlichungstag und Bekanntmachung des Hinweises auf die Patenterteilung:
**29.07.1998 Patentblatt 1998/31**

(51) Int Cl.⁶: **H02P 7/05**

(86) Internationale Anmeldenummer:
**PCT/EP94/01916**

(21) Anmeldenummer: **94920927.4**

(22) Anmeldetag: **13.06.1994**

(87) Internationale Veröffentlichungsnummer:
**WO 95/34947 (21.12.1995 Gazette 1995/54)**

(54) **VERFAHREN ZUR STEUERUNG EINES RELUKTANZMOTORS**

PROCESS FOR CONTROLLING A RELUCTANCE ENGINE

PROCEDE DE COMMANDE D'UN MOTEUR A RELUCTANCE

(84) Benannte Vertragsstaaten:
**DE ES FR GB IT**

(43) Veröffentlichungstag der Anmeldung:
**02.04.1997 Patentblatt 1997/14**

(73) Patentinhaber: **Daimler-Benz Aktiengesellschaft 70546 Stuttgart (DE)**

(72) Erfinder: **ORTHMANN, Reinhard D-55130 Mainz (DE)**

(74) Vertreter: **Fröhling, Werner Otto, Dr. et al Daimler-Benz AG, Intellectual Property Management, Sedanstr. 10/Gebäude 17 89077 Ulm (DE)**

(56) Entgegenhaltungen:
**EP-A- 0 599 334          FR-A- 2 697 697 US-A- 4 739 240**

- **IEE PROC. Bd. 127B, Nr. 4, Juli 1980,, Seiten 253 - 265 P.J. LAWRENSON ET AL 'Variable-speed switched reluctance motors'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung geht aus von einem Verfahren zur Steuerung eines Reluktanzmotors.

Der geschaltete Reluktanzmotor stellt in der speziellen Ausführung mit sechs Statorzähnen und vier Rotorzähnen die kostengünstigste Realisierungsmöglichkeit eines bürstenlosen Antriebes dar. Sein bisheriger Nachteil, eine hohe Blindleistungspulsation, konnte durch spezielle Auslegungen der magnetischen Kreise dieses Motors auf ein kleines Maß reduziert werden. In der Ansteuerelektronik dieses Motors wurden durch Verwendung von Leistungsschaltern neuartige Schaltungstopologien möglich.

Diese Gründe und seine außerordentliche Robustheit prädestinieren dieses Antriebsprinzip für einen Einsatz in Großserienprodukten, insbesondere in Kraftfahrzeugen.

Das physikalische Prinzip der Drehmomentgewinnung dieses Motortyps beruht auf dem Bestreben eines von einem magnetischen Fluß durchsetzten magnetischen Kreises, den in ihm wirksamen magnetischen Widerstand (engl. reluctance) zu minimieren. Befindet sich ein Rotor mit einem drehwinkelabhängigen magnetischen Widerstand in einem magnetischen Kreis, wird auf ihn eine Drehkraft ausgeübt, wenn seine Drehung zu einer Reduzierung des magnetischen Widerstandes führt.

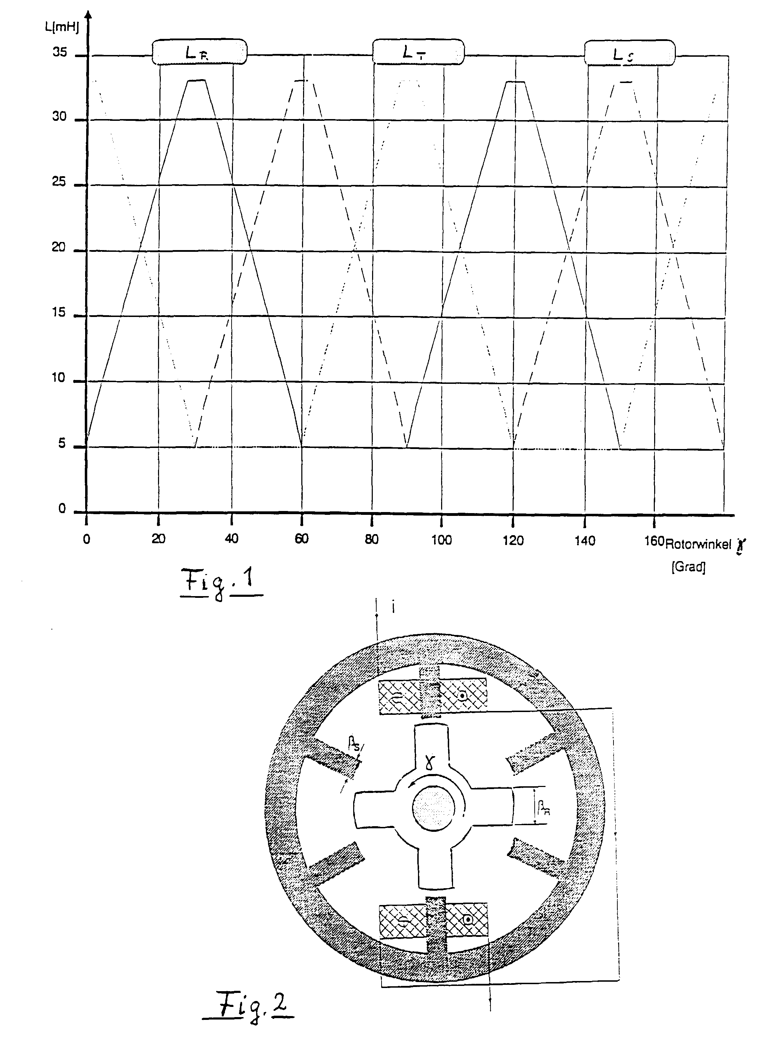

Fig. 1 zeigt einen beispielhaften Verlauf der Stranginduktivitäten eines dreiphasigen, dreisträngigen Reluktanzmotors mit 4 Rotorzähnen und 6 Statorzähnen nach Fig. 2.

Die Spulen des Stators sind paarweise zu Strängen R, S, T zusammengeschaltet. Die Induktivitäten der drei Stränge sind in Fig. 1 mit $L_R$, $L_S$ und $L_T$ gekennzeichnet. Jede der drei Kennlinien verläuft trapezförmig zwischen dem Minimal- und Maximalwert der Stranginduktivität. Der Maximalwert der Induktivität wird immer dann erreicht, wenn volle überdeckung von Statorzahn und Rotorzahn des bestromten Stranges gegeben ist. Somit wird in Bild 1 beispielsweise im Strang R im Bereich 0 ° bis 27,3 ° bei positiver Drehrichtung positives Drehmoment erzeugt, im Bereich 27,3 ° bis 32,7 ° kein Drehmoment, und im Bereich 32,7 ° bis 60 ° negatives Drehmoment.

Ein bisher offener Punkt in der Ansteuerung dieses Motortyps ist die betriebspunktabhängige Bestimmung des optimalen Ausschaltwinkels der Motorstränge. Dieser Steuerwinkel bestimmt im entscheidenden Maße das abgegebene Drehmoment, die Ausnutzung, den Wirkungsgrad, die Blindleistungspulsation und den Blindleistungsumsatz des Motors. Für das Betriebsverhalten des Reluktanzmotors ist dieser Steuerwinkel von entscheidender Bedeutung. Derzeit werden in der Literatur trotz der Fülle an Veröffentlichungen nur wenige Verfahren angegeben, gem. denen die Steuerwinkel eines Reluktanzmotors bestimmt werden können. Konkrete Aussagen beziehen sich bisher meist nur auf den Einschaltwinkel, der beispielsweise aus der DE 28 13 784 C2 bekannt ist.

In der Veröffentlichung J.T. Bass, M. Ehsani, T. Miller "Simplified electronics for torque control of sensorless switched-reluctance motors", IEEE-IE, Vol. IE-34, No. 2, May 1987, pp. 234 - 239, wird der Ausschaltwinkel rein stromabhängig zwischen einem Minimal- und Maximalwert linear verstellt. Die Autoren weisen dabei auf einen schlechten Antriebswirkungsgrad zwischen 14 % und 40 % hin.

Aus J.W. Finch, H.M.B. Metwally "Control aspects of brushless drives using switched reluctance motors" Proc. IEE Conf. PEVD'90, London, pp. 237 - 242, ist eine zweidimensionale Winkeltabelle bekannt, aus der entsprechend der aktuellen Drehzahl und des Stroms der gesuchte Ausschaltwinkel ausgelesen werden kann. Über die Generierung dieser Tabelle fehlen jegliche Aussagen.

Aus der US-PS 4 739 240 ist eine Kommutierungsschaltung für einen geschalteten Reluktanzmotor bekannt.

Aus IEE PROC., vo. 127B no. 4, July, 1980 p. 25253-265: P.J. LAWRENSON ET AL. "Variable-speed switched reluctance motors" ist ein Berechnungsverfahren für das Verhalten eines Reluktanzmotors bei variabler Drehzahl bekannt. Charakteristische Kurven für die magnetischen Flußdichten, Strömen und Drehmomente als Funktion des Drehwinkels und der Winkelgeschwindigkeit werden angegeben. Es wird keine schaltungstechnische Realisierung angedeutet.

Es wird ein Mikrocomputer eingesetzt, um die in einem Speicher abgelegten Daten des Einschaltverlaufs der Statorphasen abzurufen und daraus den Einschaltwinkel und die Impulsweite der in Phasen geschalteten Stromimpulse den Betriebsverhalten des Motors in gewissen Grenzen anzupassen. Diese Anpassung der Impulslage und Impulsdauer ermöglicht es, einen großen Drehmoment und Geschwindigkeitsbereich zu erzielen. Bei höheren Geschwindigkeiten ist eine optimale Anpassung jedoch nicht mehr auf diese einfache Weise möglich. Daher vermindert sich das Drehmoment zu höheren Geschwindigkeiten hin sehr schnell und die Motorverluste nehmen zu.

Der Erfindung liegt die Aufgabe zugrunde, bei einem Reluktanzmotor der eingangs beschriebenen Art den Ausschaltwinkel für alle Betriebszustände des Motors so einzustellen, daß eine maximale Leistung bzw. Drehmomentausbeute bei hohem Wirkungsgrad erzielt wird, und Drehmomentwelligkeit sowie Geräuschentwicklung vermindert werden.

Diese Aufgabe wird durch die im Kennzeichen des Anspruchs 1 aufgeführten Merkmale gelöst. Weiterbildungen der Erfindung sind in den Unteransprüchen aufgeführt.

Einzelheiten der Erfindung werden nachstehend anhand der Zeichnung näher erläutert.

Dabei zeigen:

Fig. 1      die Stranginduktivitäten als Funktion des Ro-

torwinkeis $\gamma$;

Fig. 2      den Querschnitt eines hier behandelten Motors;

Fig. 3      Strom und Klemmenspannung im Chop-Bereich;

Fig. 4      Strom und Klemmenspannung im Blockspannungsbereich;

Fig. 5      die Abhängigkeit der normierten Drehmomentabgabe vom normierten Abschaltwinkel;

Fig. 6      das Blockschaltbild des Regelsystems;

Fig. 7      das Leistungsstellglied und

Fig. 8      das Ablaufdiagramm.

Besitzt der magnetische Kreis zur Erzeugung des magnetischen Flusses eine elektrische Wicklung, so bestimmt der im Kreis wirksame magnetische Widerstand die Induktivität dieser Wicklung.

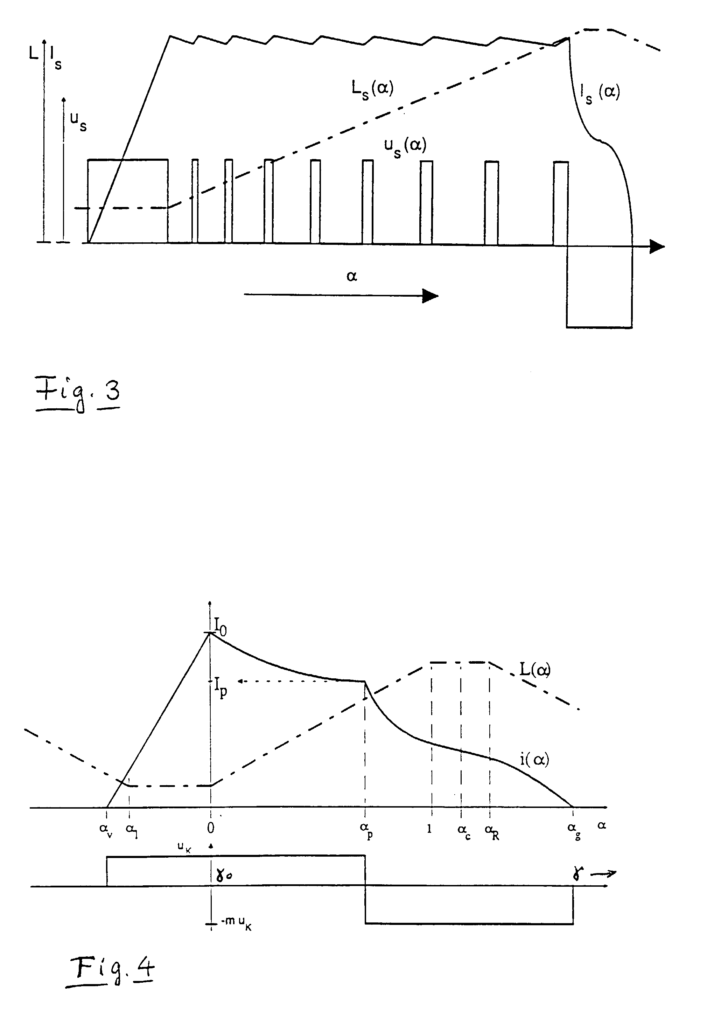

Somit kann bei gegebener Bestromung aus dem drehwinkelabhängigen Verlauf der Wicklungsinduktivität eindeutig auf den Verlauf und die Höhe des erzeugten Drehmoments geschlossen werden: Vergrößert sich die Wicklungsinduktivität bei positiver Änderung des Rotordrehwinkels $\gamma$ wird ein positives Drehmoment erzeugt; verkleinert sich die Induktivität, entsteht ein negatives Drehmoment. Erfolgt keine Änderung, kommt es zu keiner Drehmomentenbildung (s. Fig. 1).
Ein Ausführungsbeispiel eines solchen Motors ist in Fig. 2 im Querschnitt dargestellt.
Die Drehzahl-Drehmoment-Kennlinie des geschalteten Reluktanzmotors hat zwei unterschiedliche Betriebsbereiche: Der erste ist der sog. "Chop-Bereich" (s. Fig. 3). Die Strangstromregelung erfolgt mittels einer Pulsweitenmodulation der Motorklemmenspannung. Das Drehmoment wird über die Höhe des Stroms und Veränderung der Einschalt- und Ausschaltsteuerwinkel geregelt.

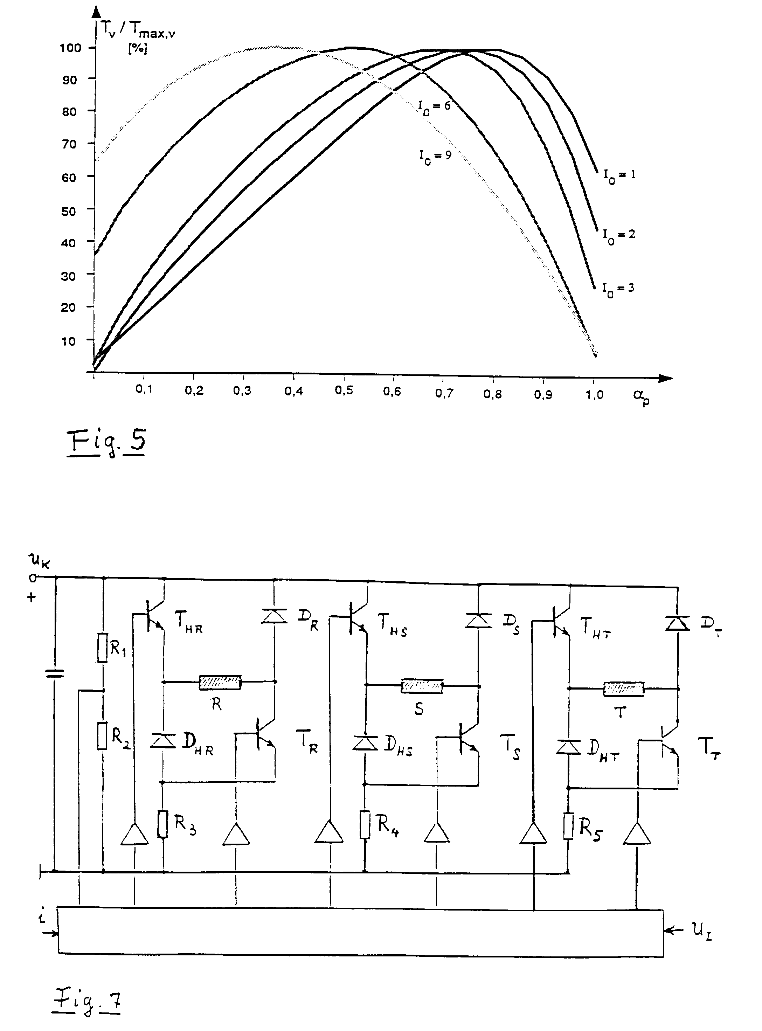

Der zweite Betriebsbereich ist der Blockspannungsbereich (s. Fig. 5). Sowohl Strom als auch Drehmoment können nur über die Veränderung des Einschalt- und Ausschaltsteuerwinkels geregelt werden.

Der übergangspunkt vom Chop-Bereich in den Blockspannungsbereich ist dann erreicht, wenn unter Vernachlässigung aller ohmschen Verluste die Versorgungsgleichspannung $u_K$ der Motorleistungselektronik gerade so groß ist wie die "Pseudo-EMK" des Motors. Der Strom $i_G$ an diesem Punkt ist ($\beta_s$ ist nach Fig. 2 definiert):

$$i_G = \frac{u_K \cdot \beta_S}{2\pi \cdot n_{ist} \cdot (L_{max} - L_{min})}$$

Sobald die Antriebsdrehzahlregelung einen Stromsollwert größer dem obengenannten vorgibt, arbeitet der Antrieb im Blockspannungsbereich Werden alle ohmschen Verluste und alle magnetischen Kopplungen vernachlässigt, sowie die Maschine als sättigungsfrei angenommen, kann der Stromverlauf im Blockspannungsbetrieb, wie er beispielsweise schematisch in Fig. 4 dargestellt ist, analytisch nachgebildet werden. Hierbei wird angenommen, daß die Motorklemmenspannung während der Einschalt- und Abkommutierungszeitdauer des Stromes konstant ist und die hierbei wirksamen Spannungen zur Versorgungsgleichspannung ein bekanntes Verhältnis haben:

Einschaltzeitdauer:

$$u_{turn\_on} = + 1 \cdot u_K$$

Abkommutierung:

$$u_{turn\text{-}off} = -m \cdot u_K.$$

Damit vereinfacht sich die Gleichung für die Motorklemmenspannung zu

$$u(\gamma) = \frac{d\gamma}{dt} \cdot \frac{d}{d\gamma} \{i \cdot L(\gamma)\} = \omega_{act} \cdot \frac{d}{d\gamma} \{i \cdot L(\gamma)\} .$$

Um die Stromkurvenform zu berechnen, muß diese Gleichung entsprechend dem Verlauf der Induktivität und dem Schaltzustand an der Motorklemme abschnittsweise gelöst werden. Hierbei wird vorausgesatzt, daß der Abschaltvorgang innerhalb der ansteigenden Induktivitätsflanke gestartet wird, d. h. $\alpha_p \leq 1$, und innerhalb der abfallenden Indukvititätsflanke beendet ist, d. h. $\alpha_S \geq \alpha_R$.

Für den weiteren Rechenvorgang werden alle Zustandsgrößen normiert. Normierter Strangstrom:

$$I = \frac{i_s}{i_G} = \frac{i_s \cdot \omega_{ist} \cdot (L_{max} - L_{min})}{u_K \cdot \beta_S}$$

Normierter Rotordrehwinkel:

$$\alpha = \frac{\gamma}{\beta_S} .$$

Definiert man den Strom bei $\alpha = 0$ als $I_0$ und integriert, so erhält man die analytische Gleichung zur Bestimmung des Stromes als Funktion des Abschaltwinkels $\alpha_p$:

$$I_p = \frac{\alpha_p + I_0 \cdot b}{b + \alpha_p};$$

$b = L_{min}/(L_{max} - L_{min}).$
Mit dieser Gleichung kann der Winkel $\alpha_g$ bestimmt werden, bei dem der Abschaltvorgang abgeschlossen ist:

$$\alpha_g = \frac{\alpha_p \cdot (1 + m) + I_0 \cdot b}{m} \, .$$

Die Dauer der Abschaltvorgangs kann hieraus bestimmt werden:

$$\alpha_{off} = \alpha_g - \alpha_p = \frac{\alpha_p + I_0 \cdot b}{m} \, .$$

Es ist festzustellen, daß der winkel $\alpha_g$ an dem die Abkommutierung abgeschlossen ist, unabhängig von der Größe des Winkelbereiches konstant maximaler Induktivität ist. Zudem kann allein aus der Kenntnis des Stromes $I_0$ zu Beginn des Induktivitätsanstiegs und dem normierten Abschaltwinkel $\alpha_p$ direkt über das Induktivitätsverhältnis b auf den Winkel $\alpha_g$ des Kommutierungsabschlusses geschlossen werden.

Das übergeordnete Ziel der Steuerung des Reluktanzmotors ist es, bei vorgegebenem Motorstrom $I_0$ das Maximum an Drehmomentausbeute zu erzielen. Theoretisch wird für eine gegebene Stromamplitude die maximale Drehmomentabgabe dann erreicht, wenn das Einschalten des Stromes schlagartig bei Beginn der ansteigenden induktivitätsflanke erfolgt und das Ausschalten des Stromes schlagartig am Ende des Induktivitätsanstieges erfolgt. Aufgrund der begrenzten Spannungsreserve innerhalb der Leistungselektronik sind die Zeiten für beide Vorgänge nicht vernachlässigbar. Bei hohen Drehzahlen werden für jeden Vorgang winkelbereiche in der Größenordnung von 15' durchaus überschritten.

Werden diese Zeiten für die Kommutierungsvorgänge in der Ansteuerung des Motors nicht berücksichtigt, führt dies zu einer starken Reduzierung des Abgabemomentes des Motors, da neben antreibendem Drehmoment auch eine starke Bremsmomentkomponente erzeugt wird oder der gewünschte Strom bei Beginn des Induktivitätsanstiegs noch nicht erreicht ist. Zusätzlich wird die Welligkeit des Drehmoments und demzufolge die Geräuschemission des Motors beeinflußt. Diese Vorgänge wirken sich um so stärker aus, je höher die Drehzahl des Rotors ist, bzw, je länger die Auf- und Abkommutierungsvorgänge bezogen auf die elektrische Periode des Motors andauern.

Fig. 5 zeigt den Einfluß des Abschaltsteuerwinkels auf die Drehmomentabgabe. Dargestellt ist die Drehmomentabgabe, normiert auf die bei vorgegebenem Strom maximales Drehmomentabgabe, als Funktion des normierten Abschaltsteuerwinkels $\alpha_p$ bei unterschiedlichen normierten Strömen $i_0$. Dieser wurde variiert zwischen $I_0 = 1$ und $I_0 = 9$. Als Systemparameter für die Simulation wurde der normierte Symmetriewinkel $\alpha_c$, der die relative Polüberdeckung von Stator- und Rotorzähnen angibt (s. Fig. 4), zu

$$\alpha_c = \frac{\gamma_c}{\beta_S} = \frac{\beta_R + \beta_S}{2\beta_S} = 1.0935$$

gewählt und das Induktivitätsverhältnis b zu 0,187 gewählt. Sättigung wurde vernachlässigt. In Fig. 5 ist beispielhaft zu erkennen, daß der optimale Wert von $\alpha_p$ mit wachsender Stromamplitude $I_0$ von $\alpha_p = 0,8$ und $I_0 = 1$ auf $\alpha_p = 0,35$ bei $I_0 = 9$ absinkt. Ungünstig gewählte Abschaltwinkel führen zu einer bemerkenswerten Einbuße am Drehmoment. Wird beispielsweise der Abschaltwinkel konstant auf 0,8 gehalten und der Strom von $I_0 = 1$ auf $I_0 = 6$ erhöht, führt die Drehmomenteinbuße aufgrund der Beibehaltung des Abschaltwinkels zu einer Drehmomentreduktion von mehr als 25 %.

Falls ein normierter Abschaltwinkel $\alpha_p = 1$ gewählt werden kann und der Abschaltvorgang vor dem Beginn der abfallenden Induktivitätsflanke beendet ist, kann das maximale Drehmoment erzielt werden. Der minimale Stromwert, für den diese Randbedingung erfüllt ist, ist

$$I_{0,min} = \frac{2m(\alpha_c - 1}{1 + b} \, .$$

Mit den bekannten Parametern von b = 0,185 m = 1 und $\alpha_c = 1,0935$, ist

$I_{0,min} = 0,158$ . Somit gilt, daß bei normierten Strömen größer als 16 % der optimale Abschaltwinkel unterschiedlich zu $\alpha_p$ gewählt werden muß.

Es stellt sich daher die Frage, wann die Abkommutierung einzuleiten bzw. wie der Abkommutierungsvorgang auf den motorischen und generatorischen Drehmomentbereich zu verteilen ist, damit sich infolge ein Maximum an Drehmomentausbeute ergibt.

Zur besseren Darstellung der Aufteilung des Abkommutierungsvorganges auf den motorischen bzw. generatorischen Drehmomentbereich wird für die weiteren Untersuchungen folgender Quotient, mit $a_{Kom}$ bezeichnet, eingeführt:

$$a_{Kom} = \frac{\alpha_g - \alpha_c}{\alpha_g - \alpha_p} \, .$$

Beispielsweise teilt sich für einen Wert von $a_{Kom} = 0,5$ der Abkommutierungsvorgang im Verhältnis 1:1 auf den motorischen und generatorischen Bereich auf. Setzt man zur Bestimmung des optimalen Abschaltwinkeis einen konstanten Wert des Abschaltverhältnisses von 2/3 an, so kann der Abschaltwinkel nach folgender einfacher Gleichung bestimmt werden:

$$\alpha_{p,opt} = \frac{3m \cdot \alpha_c - b \cdot I_0}{3m + 1}$$

für $I_0 \geq 1$ u. $a_{Kom,opt} = \frac{2}{3}$ .

Man erhält bei gegebenen Antriebsparametern eine einfache lineare Beziehung zwischen dem Abschaltwinkel und dem Strom.

Ist b=0,185, m=1 and $\alpha_c$ = 1.0935, so ist
$\alpha_{p,opt}$ = 0,820 - 0. 0462 · $I_0$

Alles, was für diesen Algorithmus bekannt sein muß, ist der aktuelle Wert des bezogenen Stromes $I_0$, dem Strom am Beginn der ansteigenden Induktivitätsflanke. Zusätzliche Strommessungen sind nicht erforderlich. Wird der Strompfad vorzeitig zum Beginn der ansteigenden Induktivitätsflanke eingeschaltet und der Strom dabei mittels eines Zwei-Punkt-Stromreglers begrenzt, ist der Strom am Beginn der ansteigenden Induktivitätsflanke auf seinem vorgegebenem Wert. Verfahren zur Bestimmung geeigneter Vorsteuerwinkel sind bekannt.

Deshalb ist es zur Bestimmung des Abschaltwinkels hinreichend, den Sollwert des Strangstromes zu kennen. Dieser Wert wird normiert mit dem aktuellen Wert der Rotordrehzahl, die innerhalb der Drehzahlregeischleife bekannt ist und mit dem aktuellen Wert der Versorgungsgleichspannung verglichen.

Der Algorithmus für den Chop-Bereich ist ähnlich dem vorgestellten Algorithmus für den Blockspannungsbereich. Unterschiede sind in der Modellierung des Taktens begründet.

In diesem Betriebsbereich legt der Stromregler eine mittlere Spannung an die Motorklemmen an, so daß das mittlere di/dt Null wird und in Folge der Strom eingeprägt ist. Hieraus ergibt sich unter Vernachlässigung aller ohmschen Verluste, daß die mittlere Spannung folgenden Wert hat:

$$u_s\left(Chop, \frac{di}{dt} = 0\right)\Bigg|_{AVG} = \frac{\partial L(\gamma, i)}{\partial \gamma} \cdot \omega_{ist} \cdot i_s \quad .$$

Der Vergleich dieser Spannung m in der Versorgungsgleichspannung führt auf ein Verhältnis n

$$n = \frac{u_K}{u_s\left(Chop, \frac{di}{dt} = 0\right)\Bigg|_{AVG}}$$

Wird $u_k$ ersetzt durch

$$u_K = \frac{i_G \cdot \omega_{ist} \cdot (L_{max} - L_{min})}{\beta_S},$$

erhält man

$$n = \frac{i_G \cdot \omega_{ist} \cdot (L_{max} - L_{min})/\beta_S}{i_s \cdot \omega_{ist} \cdot (L_{max} - L_{min})/\beta_S}$$

$$n \overset{!}{=} \frac{i_G}{i_s} \quad .$$

Da in den betr. Gleichungen das mittlere di/dt Null ist,

$$u_s\left(Chop, \frac{di}{dt} = 0\right)\Bigg|_{AVG} = \frac{\partial L(\gamma, i)}{\partial \gamma} \cdot \omega_{ist} \cdot i_s \quad ,$$

ist diese Ableitung zulässig. Folglich ist das Verhältnis n einfach der Kehrwert des normierten Stromes I:
n = 1/I,
Da der Strom eingeprägt ist, ist der Strom beim Start des Abschaltvorgangs gleich dem Strom zu Beginn der ansteigenden Induktivitätsflanke

$I_p$ (Chop) = $I_0$ = $I_{phase}$
$I_p$ (Chop) = 1/n .

Somit erhalten wir den Löschwinkel $\alpha_g$

$$\alpha_g = \alpha_p + \frac{b + \alpha_p}{n \cdot m},$$

Wird hier das Abschaltverhältnis $a_{Kom}$ wie im Blockspannungsbereich eingeführt, erhält man für den gesuchten Abschaltsteuerwinkel

$$\alpha_p = \frac{(a_{Kom} - 1) \cdot b + n \cdot m \cdot \alpha_c}{n \cdot m + 1 - a_{Kom}},$$

Wird das Abschaltverhältnis wieder aus 2/3 festgelegt und wird n = 1/$I_0$ gesetzt, folgt für $I_0 \geq I_{0min}$

$$\alpha_p, opt = \frac{3m \cdot \alpha_c - b \cdot I_0}{3 \cdot m + I_0};$$

für $I_0 \leq 1$. Vergleicht man diese Gleichung mit der entsprechenden für den Blockspannungsbereich, wird der diskontinuitätsfreie übergang bei $I_0$ = 1 vom Chop-Bereich in den Blockspannungsbereich offensichtlich.

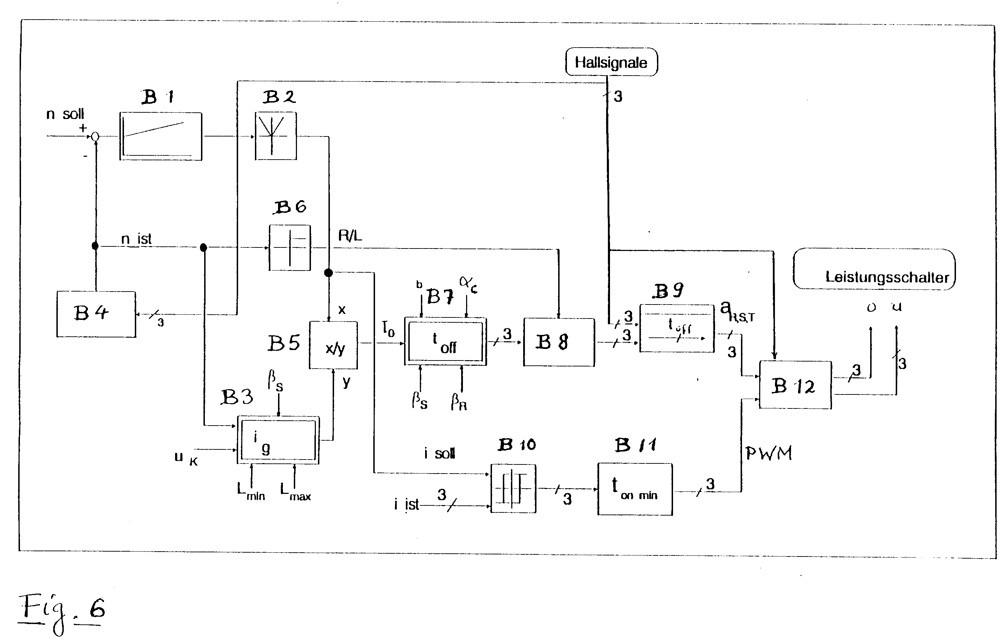

Für Ströme kleiner als $I_{0min}$ beträgt der optimale Abschaltwinkel $\alpha_p$ = 1. Nach dem hiermit die Betrachtung der für die Motorsteuerung wesentlichen Parameter abgeschlossen ist, wird anhand eines Blockschaltbildes (Fig. 6) und eines Ablaufdiagramms dargestellt, wie die gewonnenen Erkenntnisse in der Praxis benutzt werden, um einen Reluktanzmotor erfindungsgemäß mit möglichst großem Drehmoment zu betreiben.

Als Ausführungsbeispiel für die Ansteuerung des Reluktanzmotors folgt zunächst die Beschreibung des Blockschaltbildes von Fig. 6. Das Blockschaltbild beinhaltet zwei Systeme. Das eine ist das Drehzahlregelsystem, welches die aktuellen Betriebsgrößen bestimmt. Diese sind: Sollstrom $i_{soll}$, die Richtungssignale rechts-links und der Istwert der Drehzahl $n_{ist}$. Das zweite System enthält die Funktionsnetzwerke der Steuersignale. Der Sollwert des Stromes wird aus der Differenz des Ist- und Sollwertes der Drehzahl $n_{ist}$ -$n_{soll}$ bestimmt. Diese Größe wird einer Regeleinheit zugeführt (Block B1). Deren Ausgangsgröße wird im Block B2 gleichgerichtet. Am Ausgang von B 2 erhalten wir den Sollwert des Stromes $i_{soll}$. Aus dem Vorzeichen des Istwerts der Drehzahl $n_{ist}$ erhalten wir das Signal der Drehrichtung. Aus den Hallsignalen wird in B 4 der Drehzahlistwert gewonnen. Für den Rechenalgorithmus sind damit alle Betriebsgrößen bekannt. Der Algorithmus läuft wie folgt ab: Aus dem Istwert der Drehzahl $n_{ist}$ und aus dem Istwert der Versorgungsgleichspannung bzw. Zwischenkreisspannung $u_K$ (über ein Widerstandsnetzwerk gemessen), aus den Motorparametern $L_{min}$ und $L_{max}$, welche in einem Speicher abgelegt sind, und dem Wert des Statorpolwinkels $\beta_S$ der ebenfalls fest abgelegt ist, wird der Grenzstrom $i_G$ bestimmt. Dies geschieht in einem nichtlinearen Funktionsnetzwerk B3. Dieser Wert wird einem Dividierer B5 zugeführt, der aus dem Sollwert des Stromes $i_{soll}$ und dem Strom $i_G$ den normierten Strom $I_0$ = $i_{soll}/i_G$ durch Division dieser beiden Größen bestimmt. Dieser normierte Strom $I_0$ wird einem nichtlinearen Funktionsnetzwerk B7 zugeführt, welches mit den fest abgelegten Werten für den Statorpolwinkel $\beta_S$, den Rotorpolwinkel $\beta_R$, der Größe b und dem Winkel $\alpha_C$, welche alle in einem Speicher fest abgelegt sind, die Abschaltzeit $t_{off}$ errechnet. Diese Zeit wird im nachfolgenden Funktionsnetzwerk B8 noch mit der Drehrichtungsinformation R/L aus B6 bewertet und einem nichtlinearen Zeitglied zugeführt. Dieses Zeitglied B9 ist beispielsweise ein Timer-Baustein. Dieses Glied wird durch die Hallsignale der drei Motorstränge R, S, T initialisiert.

Nach Ablauf der absoluten Abschaltzeit, welche im Funktionsnetzwerk B9 ermittelt wurde, wird der Abschaltvorgang des stromführenden Stranges eingeleitet. Im nächsten Funktionsnetz B12 wird dieses Signal noch mit den pulsbreitenmodulierten Signalen des Stromreglers verknüpft. Das ist notwendig, wenn im Chop-Bereich Pulssignale für die sechs Leistungsschalter (s. Fig. 7) gebildet werden sollen. Diese pulsbreitenmodulierten Signale werden aus der Differenz zwischen dem Sollstrom und dem Iststrom gebildet, einem Zweipunktregler B10 zugeführt und anschließend über ein weiteres Glied B11 geleitet, weiches für eine Mindesteinschaltzeit $t_{on\ min}$ sorgt.

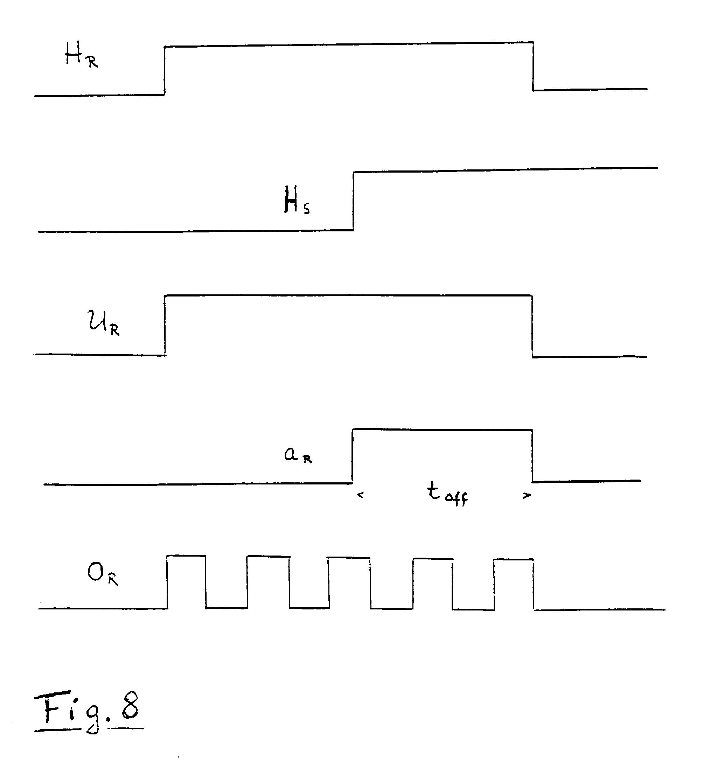

Das Pulsdiagramm (Fig. 8) zeigt die Erzeugung der Ansteuersignale für den Wechselrichter. Das Signal $O_R$ steuert den oberen Leistungsschalter im Zweig mit dem Strang R an und das Signal $U_R$ den unteren Leistungsschalter. Das Signal $H_R$ löst das Einschalten des Stranges R aus, indem es das Ansteuersignal von $U_R$ auf logisch 1 setzt. Es bleibt so lange auf logisch 1, bis der Abschaltzeitpunkt erreicht ist. Das zugehörige Signal wird dadurch ausgelöst, daß das nachfolgende Signal $H_S$ der Hallsonde für dem Strang S dem Timer-Baustein ein Startsignal gibt. Der Timer läuft so lange, bis die Zeit $t_{off}$ erreicht ist. Nach Ablauf dieser Zeit löst das Zurückgehen des Ausgangssignals das Rücksetzen des Ansteuersignals $U_R$ aus. Das Ansteuer- oder Einschaltsignal des oberen Leistungsschalters $O_R$ wird einmal dadurch ermittelt, daß die Pulsbreitmodulationssignale PWM mit dem Signal des unteren Leistungsschalters in B12 mit einer logischen Und-Schaltung verknüpft werden. Auf diese Weise stellt das zeitliche Signal $U_R$ einen langen Impuls dar und das sich daran anschließende Signal vom oberen Leistungsschalter $O_R$ ein pulsbreitenmoduliertes Signal.

## Patentansprüche

1. Verfahren zur Steuerung eines Reluktanzmotors, dessen Stator mit Wicklungen versehen ist, welche in Abhängigkeit von Winkelstellung und Drehzahl des Rotors nach einem vorgegebenen Algorithmus berechnete Stromimpulse eingeprägt erhalten, wobei jeder nach einem vorgegebenen Einschaltwinkel bestromte Wicklungsstrang nach einem Abschaltwinkel ($\gamma_P$) abgeschaltet wird, dessen Winkelzählung mit dem Induktivitätsanstieg des bestromten Stranges beginnt, und wobei zwei Betriebsbereiche zu unterscheiden sind, welche "Chop"-Bereich und Blockspannungsbereich genannt werden, **dadurch gekennzeichnet,**
daß der Abschaltwinkel ($\gamma_P$) für alle Betriebsbereiche des Reluktanzmotors berechnet wird, wobei aus dem Istwert der Drehzahl, dem Istwert der Versorgungsspannung ($U_K$), aus den minimalen und maximalen Induktivitäten ($L_{min}$, $L_{max}$) eines Motorstranges und dem Wert des Statorpolwinkels ($\beta_s$), welche in einem Speicher abgelegt sind, zunächst der Grenzstrom ($i_G$) aus dem Produkt aus dem Istwert der Versorgungsspannung ($u_K$) und dem Statorpolwinkel ($\beta_s$) dividiert durch das in einem Muliplizierer ausgeführte Produkt aus der Motordrehzahl ($n_{ist}$) und der Differenz der maximalen und minimalen Induktivität ($L_{min}$, $L_{max}$) eines Motorstranges bestimmt wird, worauf dieser Wert einem Dividierer (B5) zugeführt wird, der aus dem Sollwert des Stromes ($i_{soll}$) und dem Grenzstrom ($i_G$) einen normierten Strom bestimmt, daß dieser normierte Strom ($I_0$) einem nichtlinearen Funktionsnetzwerk (B7) zugeführt wird, welches mit den fest abgelegten Werten für den Statorpolwinkel ($\beta_s$), den Werten für die relative Polüberdeckung von Stator- und Rotorzähnen ($\alpha_c$) und den Rotorwinkel ($\beta_R$) sowie den magnetischen Motorparametern ($L_{min}$, $L_{max}$), die Abschaltzeit ($t_{off}$) ermittelt, daß diese Zeit im nachfolgenden Funktionsnetzwerk (B8) noch mit der Information für die Drehrichtung (R/L aus B6) bewertet und einem nichtlinearen Zeitglied (B9) zugeführt und zur Auslösung des Ausschaltvorganges an den Statorwicklungen verwendet wird.

2.  Verfahren nach Anspruch 1,
    dadurch gekennzeichnet,
    daß die Winkelstellung des Rotors bezüglich des Stators mittels eines Winkelsensors gemessen und damit ein Initialisierungsimpuls ausgelöst und einem Regler zugeführt wird, welcher mittels eines Rechenwerks aus der Winkelstellung des Stators, repräsentiert durch den Statorpolwinkel $\beta_s$, zunächst den Abschaltwinkel ($\alpha_p$) bestimmt, bei dem der Abschaltvorgang beginnt und darauf der Winkel ($\alpha_g$), bei dem der Abschaltvorgang zu beenden ist, der also den Zeitpunkt für den Abschaltvorgang des stromführenden Stranges bestimmt.

3.  Verfahren nach Anspruch 1 oder 2,
    dadurch gekennzeichnet,
    daß die Drehzahl über die Stromstärke in den Statorwicklungen geregelt wird.

4.  Verfahren nach einem der Ansprüche 1 bis 3.
    dadurch gekennzeichnet.
    daß der Abschaltvorgang ausgelöst wird, wenn etwa 2/3 der Gesamtzeit nach der symmetrischen Überdeckung von Stator- und Rotorzähnen verstrichen ist.

5.  Verfahren nach einem der Ansprüche 1 bis 4,
    dadurch gekennzeichnet,
    daß nach der Messung des Drehzahlistwerts $n_{ist}$ die Bestimmung des Stromsollwerts $i_{soll}$ durchgeführt wird, und anschließend mittels des daraus berechneten Strangstromes $i_s$ die Drehzahl auf den Sollwert geregelt wird.

**Claims**

1.  Method of controlling a reluctance motor, the stator of which is provided with windings, which load-dependently receive current pulses calculated in dependence on angular setting and rotational speed of the rotor according to a predetermined algorithm, wherein each winding phase, which conducts current after a predetermined switch-on angle, is switched off after a switch-off angle ($\gamma_P$), the angle registration of which begins with the inductivity rise of the phase conducting current and wherein two operating ranges, which are designated "chop" range and blocking voltage range, are to be differentiated, characterised thereby that the switch-off angle ($\gamma_P$) is calculated for all operating ranges of the reluctance motor, wherein - from the actual value of the rotational speed, the actual value of the supply voltage ($U_K$), the minimum and maximum inductance ($L_{min}$, $L_{max}$) of a motor phase and the value of the stator pole angle ($\beta_s$), which are filed in a storage device - initially the limiting current ($i_G$) is determined from the product of the actual value of the supply voltage ($U_K$) and the stator pole angle ($\beta_s$) divided by the product, which is performed in a multiplier, of the motor rotational speed ($n_{ist}$) and the difference of the maximum and minimum inductances ($L_{min}$, $L_{max}$) of a motor phase, whereafter this value is applied to a divider (B5), which determines a normalised current from the target value of the current ($i_{soll}$) and the limiting current ($i_G$), that this normalised current ($I_0$) is applied to a non-linear function network (B7), which ascertains the switch-off time ($t_{off}$) by the fixedly filed values for the stator pole angle ($\beta_s$), the values for the relative pole overlap of stator teeth and rotor teeth ($\alpha_c$) and the rotor angle ($\beta_R$) as well as the magnetic motor parameters ($L_{min}$, $L_{max}$), that this time is evaluated in the succeeding function network (B8) still by the information for the rotational direction (R/L from B6) and applied to a non-linear timing element (B9) and employed for triggering the switch-off process at the stator windings.

2.  Method according to claim 1, characterised thereby that the angular setting of the rotor with respect to the stator is measured by means of an angle sensor and thus an initialising signal is triggered and fed to a regulator, which initially determines the switch-off angle ($\alpha_p$), at which the switch-off process begins, by means of a computer from the angular setting of the stator as represented by the stator pole angle $\beta_s$ and thereupon the angle ($\alpha_g$), at which the switch-off process is to be ended, which thus determines the instant for the switch-off process of the current-conducting phase.

3.  Method according to claim 1 or 2, characterised thereby that the rotational speed is regulated by way of the current intensities in the stator windings.

4.  Method according to one of claims 1 to 3, characterised thereby that the switch-off process is triggered when about two-thirds of the total time after the symmetrical overlapping of stator teeth and rotor teeth has elapsed.

5.  Method according to one of claims 1 to 4, characterised thereby that the determination of the current target value $i_{soll}$ is performed after measurement of the rotational speed actual value $n_{ist}$ and subsequently the rotational speed is regulated to the target value by means of the phase current $i_s$ calculated therefrom.

## Revendications

1. Procédé de commande d'un moteur à réluctance dont le stator est équipé d'enroulements qui reçoivent, en fonction de la position angulaire et de la vitesse de rotation du rotor, des impulsions de courant calculées selon un algorithme prédéterminé, chaque branche d'enroulement alimentée selon un angle de mise en circuit prédéterminé étant coupée selon un angle de coupure ($\gamma_p$), dont le comptage angulaire commence avec l'accroissement de l'inductance de la branche alimentée, et deux plages de fonctionnement différentes étant prévues, appelées plages de "découpage" et plage de tension de blocage,

   caractérisé en ce que l'angle de coupure ($\gamma_p$) pour toutes les plages de fonctionnement du moteur à réluctance est calculé à partir de la valeur réelle de la vitesse de rotation, de la valeur réelle de la tension d'alimentation ($u_K$), des inductances minimales et maximales ($L_{min}$, $L_{max}$) d'une branche du moteur et de la valeur de l'angle polaire du stator ($\beta_s$), qui sont mémorisées dans une mémoire, le courant limite ($i_G$) étant obtenu à partir du produit de la valeur réelle de la tension d'alimentation ($u_K$) et de l'angle polaire du stator ($\beta_s$) divisé par le produit obtenu dans un multiplicateur à partir de la vitesse de rotation du moteur ($n_{réelle}$) et de la différence de l'inductance maximale et minimale ($L_{min}$, $L_{max}$) d'une branche du moteur, après quoi cette valeur est appliquée à un diviseur (B5), qui détermine à partir de la valeur de consigne du courant ($i_{consigne}$) et du courant limite ($i_G$) un courant normé, en ce que ce courant normé ($I_0$) est appliqué à un circuit de fonction non linéaire (B7), qui détecte l'instant de coupure ($t_{coupure}$) avec les valeurs mémorisées fixes pour l'angle polaire de stator ($\beta_s$), les valeurs pour le recouvrement polaire relatif des dents de stator et de rotor ($\alpha_c$) et l'angle de rotor ($\beta_R$) ainsi que les paramètres magnétiques du moteur ($L_{min}$, $L_{max}$), en ce que ce temps est évalué dans le circuit de fonction suivant (B8) à nouveau avec l'information pour le sens de rotation (R/L provenant de B6) et appliqué à un élément de temporisation non linéaire (B9) et est utilisé, en vue du déclenchement du processus de coupure sur les enroulements du stator.

2. Procédé selon la revendication 1, caractérisé en ce que la position angulaire par rapport au stator est mesurée au moyen d'un capteur d'angle et déclenche ainsi une impulsion d'initialisation et est appliquée à un régulateur, qui, à l'aide d'un calculateur, détermine à partir de la position angulaire du stator représentée par l'angle polaire du stator $\beta_s$, tout d'abord l'angle de coupure ($\alpha_p$), pour lequel commence le processus de coupure et ensuite l'angle ($\alpha_g$), pour lequel le processus de coupure doit prendre fin, qui détermine également l'instant pour le processus de coupure de la branche conductrice de courant.

3. Procédé selon la revendication 1 ou 2, caractérisé en ce que la vitesse de rotation est régulée par l'intensité du courant dans les enroulements du stator.

4. Procédé selon l'une quelconque des revendications 1 à 3, caractérisé en ce que le processus de coupure est déclenché lorsqu'environ 2/3 du temps total s'est écoulé après le recouvrement symétrique des dents du stator et du rotor.

5. Procédé selon l'une quelconque des revendications 1 à 4, caractérisé en ce qu'après la mesure de la valeur réelle $n_{réelle}$ de la vitesse de rotation, la détermination de la valeur de consigne $i_{consigne}$ du courant est effectuée, et ensuite au moyen du courant de branche ainsi calculé $i_s$ la vitesse de rotation est régulée à la valeur de consigne.

Fig. 1

Fig. 2

Fig. 3

Fig. 4

EP 0 765 542 B1

Fig. 5

Fig. 7

Fig. 6

Fig. 8